Europäisches Patentamt

European Patent Office

Office européen des brevets

(11) Veröffentlichungsnummer: **0 410 166 A1**

## (12) EUROPÄISCHE PATENTANMELDUNG

(21) Anmeldenummer: 90112733.2

(51) Int. Cl.5: **H01M 8/02**

(22) Anmeldetag: 04.07.90

(30) Priorität: 24.07.89 CH 2769/89

(43) Veröffentlichungstag der Anmeldung:
30.01.91 Patentblatt 91/05

(84) Benannte Vertragsstaaten:
CH DE FR GB IT LI NL SE

(71) Anmelder: **ASEA BROWN BOVERI AG**
**Haselstrasse**
**CH-5401 Baden(CH)**

(72) Erfinder: **Nazmy, Mahamed, Dr.**
**Zelglistrasse 30**
**CH-5442 Fislisbach(CH)**

(54) **Bauteil zur Stromführung für Hochtemperatur-Brennstoffzellen.**

(57) Bauteil zur Stromführung zwischen benachbarten flachen, ebenen, stapelförmig angeordneten Hochtemperatur-Brennstoffzellen mit keramischem Feststoffelektrolyt aus einem die geometrische Form bestimmenden Kern (1) aus einer warmfesten Nickelbasis-oder Eisenbasislegierung oder aus Cr, Mo, W oder Fe oder aus warmfestem, dotiertem $Ni_3Si$ und einer bei Betriebstemperatur durch $O_2$ nicht oxidierbaren metallischen Hülle (3) als Schutzschicht aus Au, Pd oder Pt oder einer Legierung dieser Elemente sowie einer Zwischenschicht (2) aus $Ni_3Si$ als Diffusionssperre zwischen Kern (1) und Hülle (3).

# FIG.1

## BAUTEIL ZUR STROMFÜHRUNG FÜR HOCHTEMPERATUR-BRENNSTOFFZELLEN

Technisches Gebiet

Hochtemperatur-Brennstoffzellen zur Umwandlung von chemischer Energie in elektrische Energie. Die elektrochemische Energieumwandlung und die hierzu benötigten Vorrichtungen gewinnen dank ihres guten Wirkungsgrades gegenüber anderen Umwandlungsarten an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Zellen weitgehend unabhängig vom verwendeten Brennstoff sein sollen und eine raumsparende Anordnung gewähren sollen.

Im engeren Sinne betrifft die Erfindung ein Bauteil zur Stromführung zwischen benachbarten flachen, ebenen, stapelförmig angeordneten Hochtemperatur-Brennstoffzellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch verbunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist.

Stand der Technik

Hochtemperatur-Brennstoffzellen mit keramischem Feststoffelektrolyten sind aus zahlreichen Veröffentlichungen bekannt. Die eigentlichen Elemente für derartige Zellen können die verschiedensten Formen und Abmessungen aufweisen. Um die ohmschen Spannungsverluste klein zu halten, wird allenthalben versucht, die Dicke der Elektrolytschicht möglichst niedrig zu halten. Form und Abmessungen der Elemente richten sich zudem nach der Forderung der Möglichkeit der elektrischen Serieschaltung einer Vielzahl von Zellen, um auf die nötige Klemmenspannung zu kommen und die Ströme vergleichsweise niedrig zu halten. Es gibt Elemente in Form von:
Zylindrischen Röhren (Westinghouse),
Konischen Röhren, ähnlich "Schachtelhalm" (Dornier)
Trapezförmigen Wellen (Argonne)
Kreisförmigen Platten (ZTEK).

Bei der Entwicklung von Brennstoffzellen mit keramischem Feststoffelektrolyt hat man sich bisher fast nur mit der Verbesserung und Verbilligung der keramischen Bauteile in Form von röhrenförmigen Brennstoffzellen-Elementen befasst. Über geeignete Anordnungen zur möglichst optimalen Raumausnutzung und der Erzielung hoher Spannungen durch geeignete, für die Serieschaltung der einzelnen Zellen vorteilhafte Konfiguration finden sich praktisch keine Hinweise.

Im Falle einer stapelförmigen Anordnung einer Vielzahl von plattenförmigen ebenen Brennstoffzellen ähnlich dem Filterpresse-Prinzip muss der Strom senkrecht zur Plattenebene von der Sauerstoffelektrode der einen Zelle zur Brennstoffelektrode nächstfolgenden Zelle geleitet werden. Als wesentliche Bauelemente sind für diese Funktion Trennplatten (Bipolarplatten) und elektrische Verbindungsglieder zu den Elektroden (Stromkollektoren) erforderlich.

Die bisher bekannten Bauelemente befriedigen vielfach bezüglich der verwendeten Werkstoffe, der Konstruktion und Fabrikation sowie dem Langzeitverhalten den modernen Anforderungen nicht.

Die bekannten, für Brennstoffzellen verwendeten Grundelemente zeichnen sich meistens durch eine vergleichsweise komplizierte Geometrie aus, die den Bau von kompakten, raumsparenden Anlagen erschwert. Ausserdem ist entsprechend den vorgeschlagenen Formen eine rationelle Fertigung im grosstechnischen Massstab kaum möglich. Insbesondere fehlt eine für eine optimale Serieschaltung der Einzelzellen brauchbare Konfiguration, die sich mit einfachen Fabrikationsmitteln realisieren lässt.

Es besteht daher ein grosses Bedürfnis nach Weiterentwicklung, Vereinfachung und Rationalisierung des Aufbaus und der Herstellung von Grund-Bauelementen und deren optimale gegenseitige Anordnung basierend auf keramischen Hochtemperatur-Brennstoffzellen.

Zum Stand der Technik werden die nachfolgenden Druckschriften genannt:
- O. Antonsen, W. Baukal und W. Fischer, "Hochtemperatur-Brennstoffbatterie mit keramischem Elektrolyten", Brown Boveri Mitteilungen Januar/Februar 1966, Seiten 21 - 30,
- US-A- 4 692 274
- US-A- 4 395 468
- W.J. Dollard und W.G. Parker, "An overview of the Westinghouse Electric Corporation solid oxide fuel cell program", Extended Abstracts, Fuel Cell Technology and Applications, International Seminar, Den Haag, Niederlande, 26. bis 29. Oktober 1987.
- F.J. Rohr, High-Temperature Fuel Cells, Solid Electrolytes, 1978 by Academic Press, Inc., Seite 431 ff.
- D.C. Fee et al., Monolithic Fuel Cell Development, Argonne National Laboratory, Paper presented at the 1986 Fuel Cell Seminar, Oct. 26 - 29, 1986 Tucson, AZ, U.S. Department of Energy, The University of Chicago.
- Shouichi Ochiai and Tomoo Suzuki, "Solubility Data in $Ni_3Si$ with Ternary Additions", BULL. P.M.E. (T.I.T.), No. 52, September 1983, Published by Research Laboratory of Precision Machinery and Electronics, Tokyo Institute of Technology, Nagatsuta, Midori-ku, Yokohama 227, Japan.
- TOMOO SUZUKI, YOSHIHIRO OYA, and SHOUICHI OCHIAI, "THE MECHANICAL BEHAVIOR of Nonstoichiometric Compounds $Ni_3Si$, $Ni_3Ge$, and $Fe_3Ga$", METALLURGICAL TRANSACTIONS A, VOLUME 15A. JANUARY 1984 - 173. - A. I. Taub, C. L. Briant, S. C. Huang, K.-M. Chang. and M. R. Jackson, "DUCTILITY IN BORON-DOPED, NICKEL-BASE $L1_2$ ALLOYS PROCESSED BY RAPID SOLIDIFICATION", General Electric Corporate Research and Development Schenectady, New York 12301, Scripta METALLURGICA Vol. 20, pp. 129 - 134, 1986.

Darstellung der Erfindung

Der Erfindung liegt die Aufgabe zugrunde, ein Bauteil zur Stromführung zwischen benachbarten ebenen, stapelförmig angeordneten Hochtemperatur-Brennstoffzellen anzugeben, welches einerseits einen guten elektrischen Kontakt sowohl zu den Elektroden der Brennstoffzelle wie zu den Bauteilen unter sich bei Temperaturen bis zu 1000 °C gewährleistet, seinerseits eine hohe metallische elektrische Leitfähigkeit besitzt und sowohl in reduzierender, neutraler wie in oxydierender Atmosphäre ohne nachteilige Veränderungen durch Materialwanderungen wie Diffusions- oder andere Migrationsvorgänge oder Materialverluste wie Abdampfen etc. eingesetzt werden kann und eine hohe Langzeitstabilität aufweist. Das Bauteil soll kostengünstig, reproduzierbar und auswechselbar hergestellt werden können.

Diese Aufgabe wird dadurch gelöst, dass das eingangs erwähnte Bauteil aus einem die geometrische Form bestimmenden Kern aus einem warmfesten Werkstoff ausgewählt aus einer Eisenbasis- oder Nickelbasislegierung, oder Fe, Cr, Mo, W oder einer Legierung dieser Elemente, die höchstens 0,2 Gew.-% Al, Ti, Nb, Co und höchstens 0,5 Gew.-% Si enthält, oder der intermetalli schen Verbindung Nickelsilizid $Ni_3Si$ und einer in Sauerstofatmosphäre bei Betriebstemperatur nicht oxydierenden metallischen Hülle als Schutzschicht ausgewählt aus den Elementen Au, Pd, Pt oder einer beliebigen Legierung mindestens zweier dieser Elemente und einer als Diffusionssperre dienenden Zwischenschicht aus $Ni_3Si$ zwischen Kern und Hülle besteht.

Weg zur Ausführung der Erfindung:

Die Erfindung wird anhand der nachfolgenden, durch Figuren näher erläuterten Ausführungsbeispiele beschrieben.

Dabei zeigt:

Fig. 1 einen Längsschnitt durch einen Stromkollektor in Form eines Kontaktfingers mit durchgehender Hülle,

Fig. 2 einen Längsschnitt durch einen Stromkollektor in Form eines Kontaktfingers mit nicht durchgehender Hülle und durchgehender Diffusionssperre,

Fig. 3 einen Längsschnitt durch einen Stromkollektor in Form eines Kontaktfingers mit nicht durchgehender Hülle und nicht durchgehender Diffusionssperre,

Fig. 4 einen Längsschnitt durch einen Stromkollektor in Form eines gewellten Drahtes,

Fig. 5 einen Längsschnitt durch eine Trennplatte,

Fig. 6 einen Längsschnitt durch eine Bipolarplatte,

Fig. 7 einen Längsschnitt durch einen Stromkollektor in Form eines Kontaktfingers, dessen Kern aus dem Werkstoff der Diffusionssperre besteht,

Fig. 8 einen Längsschnitt durch einen Stromkollektor in Form eines gewellten Bandes, dessen Kern aus dem Werkstoff der Diffusionssperre besteht,

Fig. 9 einen Längsschnitt durch eine Trennplatte, deren Kern aus dem Werkstoff der Diffusionssperre besteht,

Fig. 10 einen Längsschnitt durch eine Bipolarplatte, deren Kern aus dem Werkstoff der Diffusionssperre besteht.

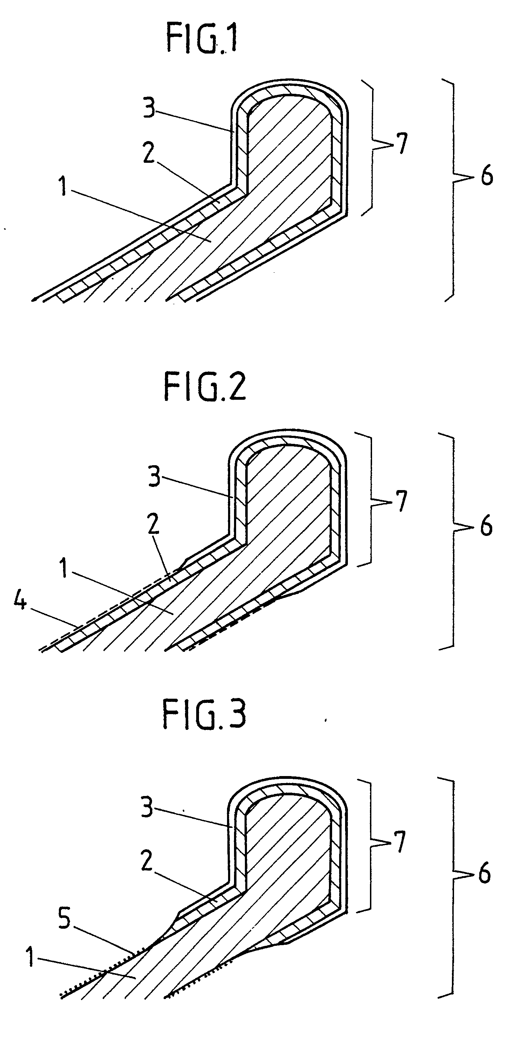

In Fig. 1 ist ein Längsschnitt durch einen Stromkollektor in Form eines Kontaktfingers mit durchgehender Hülle dargestellt. 1 stellt allgemein den Kern des Bauteils dar. Er besteht aus Cr, Mo, W, Fe oder einer Al- und Si-freien Nickel- oder Eisenbasislegierung mit oder ohne Oxyddispersion. 2 ist eine Zwischenschicht des Bauteils, die als Diffusionssperre für Edelmetalle wirkt. Sie besteht aus der intermetallischen Verbindung $Ni_3Si$, die gegebenenfalls weitere Zusätze zur Erhöhung der Warmfestigkeit und/oder Duktilität enthält. 3 stellt die als Schutzschicht wirkende Hülle des Bauteils dar. Sie besteht im allgemeinen aus einem Edelmetall ausgewählt aus Au oder einem Platinmetall oder einer Legierung des genannten Elements.

Vorzugsweise besteht die Hülle 3 aus Au, Pd oder einer Au/Pd-Legierung. Im vorliegenden Fall bezeichnet 6 ein als Stromkollektor in Form eines Kontaktfingers ausgebildetes Bauteil. 7 ist der Kopf des Kontaktfingers.

Fig. 2 zeigt einen Längsschnitt durch einen Stromkollektor in Form eines Kontaktfingers mit nicht durchgehender Hülle und durchgehender Diffusionssperre. 1 ist der aus einem warmfesten metallischen Werkstoff gemäss Fig. 1 bestehende Kern des Bauteils. Die Zwischenschicht 2 ist durchgehend, während die Hülle 3 als Schutzschicht lediglich in Form einer Kappe auf dem Kopf 7 des Bauteils sitzt. Auf dem nicht durch die Hülle 3 geschützten Teil des Kontaktfingers 6 befindet sich die sich spätestens im Betrieb bei erhöhter Temperatur aus Elementen der Zwischenschicht 2 bildende Schutzoxydschicht 4. Letztere besteht im vorliegenden Fall vornehmlich aus $SiO_2$.

Fig. 3 bezieht sich auf einen Längsschnitt durch einen Stromkollektor in Form eines Kontaktfingers mit nicht durchgehender Hülle und nicht durchgehender Diffusionssperre. 1 entspricht dem Kern gemäss Fig. 1. Sowohl die Zwischenschicht (Diffusionssperre) 2 als auch die Hülle (Schutzschicht) 3 bedeckt nur den Kopf 7 des Kontaktfingers 6. Auf dem nicht durch die Hülle 3 noch durch die Zwischenschicht 2 geschützten Teil des Kontaktfingers 6 befindet sich die aus dem Werkstoff des Kerns 1 gebildete Schutzoxydschicht 5. Diese besteht zum Beispiel überwiegend aus $Cr_2O_3$.

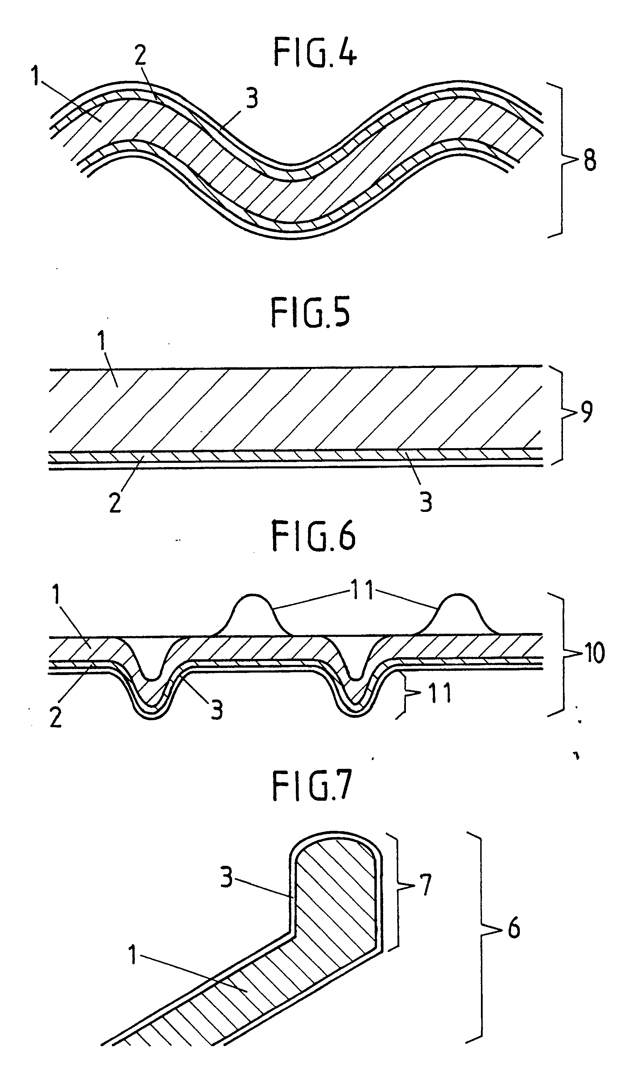

In Fig. 4 ist ein Längsschnitt durch einen Stromkollektor in Form eines gewellten Draht dargestellt. Der Stromkollektor 8 besteht aus einem elastischen, in Form sinusähnlicher Wellen vorliegenden Draht. 1 ist der Kern des Bauteils, der gemäss Fig. 1 aus einem metallischen Hochtemperaturwerkstoff besteht. 2 ist die Zwischenschicht aus $Ni_3Si$, 3 die Hülle aus Edelmetall.

In Fig. 5 ist ein Längsschnitt durch eine Trennplatte wiedergegeben. Der Kern des Bauteils ist auf einer Seite mit der Zwischenschicht (Diffusionssperre) 2 und der als Schutzschicht wirkenden Hülle 3 versehen. Die andere Seite der Trennplatte 9 ist in vorliegendem Fall unbeschichtet. Derartige Trennplatten 9 werden als Seperatoren zwischen Stromkollektoren ungleichnamiger Polarität zur Trennung und Führung der unterschiedlichen gasförmigen Medien (Sauerstoffträger und gasförmiger Brennstoff) verwendet.

Fig. 6 zeigt einen Längsschnitt druch eine Bipolarplatte. Die Bipolarplatte 10 besteht aus einem Kern 1 in Form eins profilierten Bleches mit Erhebungen 11 in Form von Noppen und den einseitig aufgebrachten Schichten 2 und 3. Die Noppen 11 sind auf beiden Seiten vorhanden und gegeneinander versetzt ange ordnet. Die als Diffusionssperre wirkende Zwischenschicht 2 besteht aus $Ni_3Si$. Für die nichtcxydierbare Hülle 3 in Form einer Schutzschicht ist ein Edelmetall vorgesehen.

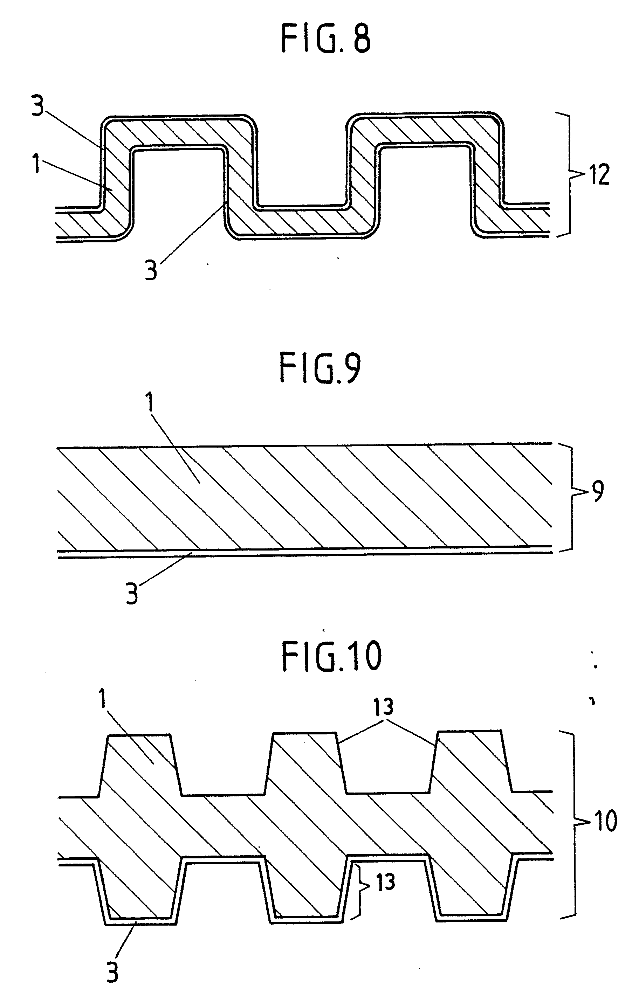

Fig. 7 bezieht sich auf einen Längsschnitt durch einen Stromkollektor in Form eines Kontaktfingers dessen Kern aus dem Werkstoff der Diffusionssperre besteht. Im vorliegenden Fall handlet es sich beim Kern 1 des Bauteils um eine kompakte, die Form bestimmende Masse aus $Ni_3Si$. Die aus einem Edelmetall bestehende Hülle 3 sitzt direkt auf dem Kern 1 auf. Die übrigen Bezugszeichen entsprechen der Fig. 1.

In Fig. 8 ist ein Längsschnitt durch einen Stromkollektor in Form eines gewellten Bandes wiedergegeben, dessen Kern aus dem Werkstoff der Diffusionssperre besteht. Der Stromkollektor 12 liegt im vorliegenden Fall als gewelltes Band mit rechteckförmigen Wellen vor. Auf dem Kern 1 aus $Ni_3Si$ sitzt direkt die als Schutzschicht wirkende Hülle 3 aus einem Edelmetall beidseitig auf.

Fig. 9 zeigt einen Längsschnitt durch eine Trennplatte, dessen Kern aus dem Werkstoff der Diffusionssperre besteht. Die ebene Trennplatte 9 ist grundsätzlioh ähnlich wie Fig. 5 aufgebaut. Der Kern 1 besteht jedoch aus kompaktem $Ni_3Si$, auf den die aus einem Edelmetall bestehende Hülle 3 direkt einseitig aufgebracht ist.

Fig. 10 bezieht sich auf einen Längsschnitt durch eine Bipolarplatte, deren Kern aus dem Werkstoff der Diffusionssperre besteht. Die Bipolarplatte 10 weist auf beiden Seiten Erhebungen 13 in Form von Warzen oder Leisten zwecks Kontakt zu den Elektroden und Stromführung auf. Der Kern 1 des Bauteils besteht aus kompakten $Ni_3Si$. Darauf ist die Hülle 3 aus Edelmetall direkt einseitig aufgebracht.

Ausführungsbeispiel 1;

Siehe Fig. 1!

Das Bauteil lag in Form eines aus einem Blechkörper gefertigten Stromkollektors mit zahlreichen Kontaktfingern 6 vor. Das zu diesem Zweck verwendete Blech hatte eine Dicke von 0,6 mm und bestand aus einer Nickelbasis-Superlegierung mit dem Handelsnamen Inconel 600 mit der nachfolgenden Zusammensetzung:

Cr = 15,5 Gew.-%
Fe = 8,0 Gew.-%
Mn = 0,5 Gew.-%
Si = 0,2 Gew.-%
C = 0,08 Gew.-%
Ni = Rest

Auf den gestanzten und in die Form von Kontaktfingern 6 gepressten Blechkörper wurde allseitig eine 10 μm dicke Zwischenschicht 2 (Diffusionssperre) aus der intermetallischen Verbindung Ni₃Si durch Kathodenzerstäubung aufgebracht. Auf die Zwischenschicht 2 wurde die Hülle 3 (Schutzschicht) in Form eines galvanischen Überzugs von Gold in einer durchschnittlichen Dicke von 25 μm elektrochemisch abgeschieden. Der Prozess wurde so geführt, dass die maximale Dicke der Hülle 3 im Bereich des Kopfes 7 des Kontaktfingers 6 ca. 40 μm betrug.

Ausführungsbeispiel 2:

Siehe Fig. 2!

Aus einem Blechkörper wurde ähnlich Beispiel 1 ein Bauteil in Form eines aus einer Vielzahl von Kontaktfingern 6 bestehenden Stromkollektors gefertigt. Das Blech hatte eine Dicke von 0,4 mm und bestand aus einer Eisenbasislegierung mit der Werkstoffnummer 1.4845 und der Bezeichnung X12CrNi25 21 gemäss Deutscher Norm DIN mit der nachfolgenden Zusammensetzung:

Cr = 25 Gew.-%
Ni = 20 Gew.-%
Si = 0,45 Gew.-%
Mn = 0,7 Gew.-%
C = 0,1 Gew.-%
Fe = Rest

Auf den gemäss Beispiel 1 geformten Blechkörper wurde allseitig eine 10 μm dicke Zwischenschicht 2 von mit 0,1 % B dotiertem Ni₃Si durch Kathodenzerstäubung aufgebracht. Auf die Zwischenschicht 2 wurde nur im Bereich des Kopfes 7 des Kontaktfingers 6 abwechslungsweise eine Anzahl von ca. 3 μm dicken Palladiumschichten und ca. 7 μm dicken Goldschichten derart galvanisch aufgebracht, dass im Mittel die ca. 30 μm dicke Hülle 3 eine Zusammensetzung von 80 Gew.-% Au/20 Gew.-% Pd aufwies. Nach dem üblichen Reinigen und Trocknen wurde der Stromkollektor während 1/2 h bei 900 °C im Vakuum geglüht. Durch Diffusion wurde ein Mischkristall der vorgenannten Zusammensetzung mit einem Soliduspunkt von ca. 1340 °C gebildet, also ein Wert, der nahezu 300 °C höher als der Schmelzpunkt des reinen Goldes lag. Durch diese Massnahme konnte die Festigkeit und Härte bei der Betriebstemperatur von 900 °C gegenüber den Werten des reinen Goldes wesentlich gesteigert und der Dampfdruck erniedriegt werden. Im Betrieb wurde auf den nicht mit einer Hülle 3 geschützten Stellen des Kontaktfingers 6 eine im Wesentlichen aus SiO₂ bestehende Schutzoxydschicht 4, aus dem Werkstoff der Zwischenschicht 2 stammend, gebildet.

Ausführungsbeispiel 3:

Siehe Fig. 3!

Aus einem gewalzten Band wurde ähnlich Beispiel 1, jedoch durch Warmpressen ein Bauteil in Form eines aus 4 parallel angeordneten Kontaktfingern 6 bestehenden Stromkollektors gefertigt. Das Band hatte eine Dicke von 0,5 mm und bestand aus einer oxyddispersionsgehärteten Ni/Cr-Legierung mit der Handelsbezeichnung TD NiCr mit der nachfolgenden Zusammensetzung:

Cr = 20 Gew.-%
ThO₂ = 2,0 Gew.-%
Ni = Rest

Auf das Bauteil wurde lediglich auf den Kopf 7 des Kontaktfingers 6 eine 5 μm dicke Zwischenschicht 2 (Diffusionssperre) aus der intermetallischen Verbindung Ni₃Si durch Kathodenzerstäubung aufgebracht. Auf die Zwischenschicht 2 wurden im Bereich des Kopfes 7 des Kontaktfingers 6 abwechslungsweise je 4 Palladiumschichten und Goldschichten von je ca. 5 μm Dicke derart galvanisch aufgebracht, dass im Mittel die ca. 40 μm dicke Hülle 3 eine Zusammensetzung von 60 Gew.-% Au/40 Gew.-% Pd aufwies. Danach wurde das Werkstück während 1/4 h bei 1000 °C in Argonatmosphäre geglüht. Der durch Diffusion gebildete Mischkristall der vorgenannten Zusammensetzung wies eine Solidustemperatur von ca. 1440 °C auf. Diese Legierung zeichnete sich besonders durch eine gegenüber reinem Gold und reinem Palladium wesentlich erhöhte Festigkeit und Härte aus. Bei Raumtemperatur wurde für den weichgeglühten Zustand eine Zugfestigkeit von 350 MPa und eine Vickershärte von 160 VH gemessen. Im Betrieb bildete sich auf den nicht durch die Hülle 3 und nicht durch die Zwischenschicht 2 abgedeckten Stellen des Kontaktfingers 6 eine Schutzoxydschicht 5, die aus dem Werkstoff des Kerns 1 stammte und im wesentlichen aus Cr₂O₃ bestand.

Ausführungsbeispiel 4:

Siehe Fig. 4

Das Bauteil lag in Form eines Stromkollektors 8, bestehend aus einem gewellten Draht vor. Der Draht hatte eine Dicke von 0,35 mm und bestand aus oxyddispersionsgehärtetem Molybdän der nachfolgenden Zusammensetzung:

La₂O₃ = 2 Gew.-%
Mo = Rest

Auf den gewellten Draht 8 wurde allseitig eine 3 μm dicke Zwischenschicht 2 aus mit 0,2 % B dotiertem Ni₃Si durch Kathodenzerstäubung aufgebracht. Auf die Zwischenschicht 2 wurde die Hülle 3 (Schutzschicht) in Form eines galvanischen Überzuges von Palladium in einer durchschnittlichen Dicke von 20 μm elektrochemisch abgeschieden. Molybdän hat auch bei 1000 °C ausgezeichnete Warmfestigkeit und lässt in seinen Federeigenschaften kaum nach. Durch die Oxyddispersion wird durch Gleitebenenblockierung die Warmfestigkeit weiter erhöht.

Ausführungsbeispiel 5:

Siehe Fig. 4!

Der in Form eines gewellten Drahtes vorliegende Stromkollektor 8 hatte einen Durchmesser von 0,3 mm und bestand aus oxddispersionsgehärtetem Wolfram mit folgender Zusammensetzung:

$ThO_2$ = 2 Gew.-%
W = Rest

Es wurde analog Beispiel 4 verfahren. Der gewellte Draht 8 wurde mit einer 5 $\mu$m dicken Zwischenschicht 2 aus B-dotiertem $Ni_3Si$ versehen, welche ihrerseits mit einer Hülle 3 aus galvanisch abgeschiedenem Platin in einer Dicke von 30 $\mu$m überzogen wurde. Platin eignet sich dank seiner vergleichsweise hohen Schmelztemperatur und seines gegenüber Gold bei 1000 °C um 6 Zehnerpotenzen niedrigeren Dampfdruckes sehr gut für Langzeit-Dauerbetrieb bei Temperaturen oberhalb ca. 600 °C.

Ausführungsbeispiel 6:

Siehe Fig. 5!

Das Bauteil lag in Form einer aus einem Blech gefertigten Trennplatte 9 vor. Das Blech hatte eine Dicke von 0,8 mm und bestand aus einer Nickelbasis-Superlegierung mit dem Handelsnamen Inconel 690 mit der nachfolgenden Zusammensetzung:

Cr = 30 Gew.-%
Fe = 9,5 Gew.-%
C = 0,03 Gew.-%
Ni = Rest

Der Kern 1 des Bauteils wurde einseitig mit einer Zwischenschicht 2 (Diffusionssperre) von 100 $\mu$m Dicke aus $Ni_3Si$ unter Anwendung des Vakuum-Plasmaspritzverfahrens versehen. Auf diese Zwischenschicht 2 wurde eine Hülle 3 in Form eines 80 $\mu$m dicken Goldbleches unter reduzierender Atmosphäre warm aufgewalzt. Auf diese Weise wurden allfällig vorhandene, vom Plasmaspritzen herrührende Poren vollständig geschlossen.

Ausführungsbeispiel 7:

Siehe Fig. 6!

Das Bauteil bestand aus einer Bipolarplatte 10 mit beidseitigen Erhebungen 11 in Form von Noppen. Als Werkstoff des Kerns 1 wurde eine Eisen/Nickel-Legierung mit der Handelsbezeichnung Incoloy 802 verwendet. Der in Form einer Knetlegierung vorliegende Werkstoff hatte die nachfolgende Zusammensetzung:

Cr = 21,4 Gew.-%
Fe = 45 Gew.-%
Ni = 32 Gew.-%
Mn = 0,8 Gew.-%
Si = 0,4 Gew.-%
C = 0,4 Gew.-%

Ein aus diesem Werkstoff bestehendes weichgeglühtes Blech von 0,7 mm Dicke wurde zur Herstellung der Noppen 11 warmgepresst. Dann wurde eine Zwischenschicht 2 einseitig wie folgt aufgebracht. Der Werkstoff des Kerns 1 wurde zunächst einseitig mit einer durchschnittlich 70 $\mu$m dicken Nickelschicht nach dem elektrochemischen Abscheideverfahren belegt. Auf diese Nickelschicht wurde feinkörniges Siliziumpulver (Korngrösse maximal 50 $\mu$m) im richtigen stöchiometrischen Verhältnis zur Erzeugung der intermetallischen Verbindung $Ni_3Si$ aufgegeben und das Ganze während 1/2 h bei 1100 °C einer Glühung in Vakuum unterworfen. Dabei diffundierte das Silizium in die Nickelschicht ein und verband sich mit dieser zu $Ni_3Si$ (Zwischenschicht 2). Auf die gebildete Zwischenschicht 2 von durchschnittlich ca. 100 $\mu$m Dicke wurde einseitig eine Hülle 3 aus Palladium in einer Dicke von 40 $\mu$m galvanisch aufgetragen.

Ausführungsbeispiel 8:

Siehe Fig. 6!

Ähnlich Beispiel 7 bestand das Bauteil aus einer Bipolarplatte 10 mit Erhebungen 11. Als Werkstoff für den Kern 1 wurde eine warmfeste Cr/Fe/Mo-Gusslegierung mit der nachfolgenden Zusammensetzung verwendet:

Cr = 60 Gew.-%
Fe = 15 Gew.-%
Mo = 25 Gew.-%

Die Form der Bipolarplatte 10 wurde nach dem Präzisionsgussverfahren hergestellt. Die Dicke der Platte betrug durchschnittlich 1 mm. Die Zwischenschicht 2 aus $Ni_3Si$ wurde in einer Dicke von 200 $\mu$m nach dem Vakuum-Plasmaspritzverfahren aufgebracht. Die Hülle 3 bestand aus einer Legierung der Zusammensetzung 60 Gew.-% Pd/40 Gew.-% Pt und hatte eine Dicke von ca. 30 $\mu$m. Sie wurde nach einem elektrochemischen Verfahren aufgetragen.

Ausführungsbeispiel 9:

Siehe Fig. 7:

Das Bauteil lag in Form eines Stromkollektors mit 6 parallelen Kontaktfingern 6 vor. Es wurde aus einem Blechkörper der mit Bor und Chrom dotierten intermetallischen Verbindung $Ni_3Si$ durch Warmpressen hergestellt.

Nach einer Vorbehandlung im Blankglühofen wurde der ganze Kontaktfinger 6 galvanisch mit einer 50 $\mu$m dicken Goldschicht (3) überzogen.

Ausführungsbeispiel 10:

Siehe Fig. 8!

Das Bauteil lag als Stromkollektor 12 in Form eines gewellten Bandes vor. Der Kern 1 des Bandes bestand aus der mit 0,3 % Bor dotierten, durch sehr schnelle Abkühlung nach dem "meltspinning"-Verfahren vergleichsweise duktil erstarrten intermetallischen Verbindung $Ni_3Si$. Das Band hatte eine Dicke von 0,3 mm und wurde in einer Vorrichtung durch Warmpressen zu einer rechteckigen Welle verformt.

Nach einer Glühung in reduzierender Atmosphäre wurde das Band 12 galvanisch mit einer 30 $\mu$m dicken Palladiumschicht (3) überzogen.

Ausführungsbeispiel 11:

Siehe Fig. 9!

Als Bauteil wurde eine Trennplatte 9 hergestellt. Der Kern 1 bestand aus einem gewalzten Blech aus der mit 0,5 % Bor dotierten intermetallischen Verbindung $Ni_3Si$ von 0,7 mm Dicke. Das ebene Blech wurde nach einer Vorbehandlung (Glühung in re duzierender Atmosphäre) einseitig mit einer Hülle 3 von 50 $\mu$m Dioke aus Platin versehen. Das Aufbringen der Schutzschicht aus Platin erfolgte nach dem elektrochemischen Verfahren.

Ausführungsbeispiel 12:

Siehe Fig. 10!

Das Bauteil bestand aus einer Bipolarplatte 10 mit Erhebungen 13 in Form von Warzen. Als Werkstoff des Kerns 1 wurde $Ni_3Si$ verwendet. Die im ebenen Teil ca. 1,2 mm dicke, mit ca. 1,4 mm hohen Erhebungen 13 versehene Bipolarplatte 10 wurde durch Präzisionsguss hergestellt.

Eine Seite der Bipolarplatte 10 wurde mit einer Hülle 3 als Schutzschicht bestehend aus einer Legierung 70 Gew.-% Au/30 Gew.-% Pd von 40 $\mu$m Dicke versehen. Dabei wurden abwechslungsweise Palladium- und Goldschichten von max. 5 $\mu$m Dikke im richtigen stöchiometrischen Verhältnis galvanisch aufgetragen und das Ganze anschliessend bei 950 $^\circ$C unter Vakuum während 1/2 h zwecks Diffusionsausgleichs geglüht.

Ausführungsbeispiel 13:

Siehe Fig. 7!

Das Bauteil stellte einen Stromkollektor 6 in Form eines Kontaktfingers dar. Der Kern 1 des Bauteils wurde aus einer oxyddispersionsgehärteten intermetallischen Verbindung der Zusammensetzung $Ni_3Si$ gefertigt.

Zunächst wurden stöchiometrische Mengen von Nickel und Silizium im Tiegel unter Vakuum erschmolzen und die Schmelze abgegossen. Aus den erstarrten Stücken wurde durch suksesive Zerkleinerung ein feinkörniges Pulver von höchstens 30 $\mu$m Partikeldurchmesser hergestellt und mit 2 Gew.-% Thoriumoxyd $ThO_2$ gemischt. Die Mischung wurde im Attritor unter Toluol während 20 h mechanisch legiert. Das Legierungspulver wurde in eine entsprechende Form abgefüllt und bei 1000 $^\circ$C durch Warmpressen bis auf mindestens 98 % der theoretischen Dichte verdichtet.

Nach dem Blankglühen in reduzierender Atmosphäre wurde der Kontaktfinger 6 gebeizt und allseitig galvanisch mit einer 40 $\mu$m dicken Hülle (3) aus Palladium überzogen.

Ausführungsbeispiel 14:

Siehe Fig. 10!

Als Bauteil wurde eine Bipolarplatte 10 mit Erhebungen 13 in Form von Leisten hergestellt. Der Kern 1 des Bauteils wurde aus einer mit 0,5 Gew.-% Bor dotierten oxyddispersionsgehärteten intermetallischen Verbindung der Zusammensetzung $Ni_3Si$ hergestellt.

Dabei wurde analog Beispiel 13 vorgegangen. Das mit Bor dotierte $Ni_3Si$-Pulver von maximal 25 $\mu$m Partikeldurchmesser wurde mit 1,5 Gew.-% Yttriumoxyd $Y_2O_3$ gemischt und während 24 h unter Toluol im Attritor mechanisch legiert. Die Bipolarplatte 10 wurde durch Heisspressen des Legierungspulvers bei einer Temperatur von 950 $^\circ$C hergestellt. Dabei wurde eine Dichte von 99 % des theoretischen Wertes erreicht. Nach der üblichen Reinigungsbehandlung wurde die Bipolarplatte 10 einseitig nach dem elektrochemischen Verfahren mit einer Hülle 13 aus Platin von 30 $\mu$m Dicke überzogen.

Ausführungsbeispiel 15:

Siehe Fig. 7!

Als Bauteil wurde ein Stromkollektor 6 in Form eines Kontaktfingers mit einem verdickten Kopf 7 hergestellt. Der Kern 1 des Bauteils wurde aus zwei Zonen aufgebaut, wobei die im Innern liegende eigentliche Kernzone aus einer mit 2 Gew.-%

Thoriumoxyd $ThO_2$ oxyddispersionsgehärteten intermetallischen Verbindung $Ni_3Si$ bestand. Die aussenliegende Randzone hingegen bestand aus nicht-oxyddispersionsgehärtetem $Ni_3Si$, welches mit 0,5 Gew.-% Bor zwecks Erhöhung der Duktilität dieser Zone dotiert war.

Analog Beispiel 13 wurden stöchiometrische Mengen von Nickel und Silizium geschmolzen und zu einem Pulver von höchstens 30 µm Partikeldurchmesser verarbeitet, mit 2 Gew.-% $ThO_2$ gemischt und im Attritor mechanisch legiert. Die Formgebung erfolgte durch heiss-isostatisches Pressen bei 1000 °C während 1/2 h. Der Kontaktfinger 6 wurde nach dem Reinigen mit einer Schicht von mit 0,5 Gew.-% Bor dotiertem $Ni_3Si$ durch Vakuum-Plasmaspritzen überzogen. Die Schichtdicke betrug am Schaft des Kontaktfingers durchschnittlich 250 µm, am Kopf 7 (insbesondere an dessen Scheitel) ca. 400 µm.

Nach der Reinigung wurde der Kopf 7 des Kontaktfingers galvanisch mit einer 50 µm dicken Hülle (3) aus Platin versehen. Dieser Stromkollektor vereinigte hohe Festigkeit der Kernzone mit guter Duktilität der Randzone (Oberflächenschicht).

Die Erfindung ist nicht auf die Ausführungsbeispiele beschränkt.

Das Bauteil zur Stromführung zwischen benachbarten flachen, ebenen, stapelförmig angeordneten Hochtemperatur-Brennstoffzellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch verbunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist, besteht aus einem die geometrische Form bestimmenden Kern 1 aus einem warmfesten Werkstoff ausgewählt aus einer Eisenbasis- oder Nickelbasislegierung, oder Fe, Cr, Mo, W oder einer Legierung dieser Elemente, die höchstens 0,2 Gew.-% Al, Ti, Nb, Co und höchstens 0,5 Gew.-% Si enthält, oder der intermetallischen Verbindung Nickelsilizid $Ni_3Si$ und einer in Sauerstoffatmosphäre bei Betriebstemperatur nicht oxydierenden metallischen Hülle 3 als Schutzschicht ausgewählt aus den Elementen Au, Pd, Pt oder einer beliebigen Legierung mindestens zweier dieser Elemente und einer als Diffusionssperre dienenden Zwischenschicht 2 aus $Ni_3Si$ zwischen Kern 1 und Hülle 3. Das Bauteil ist als Stromkollektor in Form eines Kontaktfingers 6 oder Kammes oder Drahtes 8 oder Bandes 12 oder Geflechtes oder als Trennplatte 9 oder als Bipolarplatte 10 ausgebildet.

Der Werkstoff des Kerns 1 besteht in der einen Ausführungsform aus mit weiteren, zum Teil das Si substituierenden Elementen dotiertem, bei Betriebstemperatur bis 1000 °C eine hohe Kriechfestigkeit und federnde Eigenschaften aufweisenden $Ni_3Si$, welches allein direkt zur Aufnahme der mechanischen Belastung im Betrieb herangezogen wird.

Der Werkstoff des Kerns 1 besteht in einer anderen Ausführungsform aus einer Nickelbasislegierung mit höchstens 78 Gew.-% Nickel, wobei eine mechanisch nicht belastete Zwischenschicht 2 von höchstens 100 µm Dicke zwischen Kern und Hülle vorgesehen ist.

In einer vorzugsweisen Ausführungsform besteht der Werkstoff des Kerns 1 aus einer oxyddispersionsgehärteten Ni/Cr-Legierung mit höchstens 78 Gew.-% Ni und mindestens 20 Gew.-% Cr und höchstens total 2 Gew.-% von Dispersoiden ausgewählt aus mindestens einem der Oxyde $ThO_2$, $Y_2O_3$ oder $La_2O_3$ oder aus einer oxyddispersionsgehärteten W- oder Mo- oder W/Mo-Legierung mit höchstens total 5 Gew.-% von Dispersoiden ausgewählt aus mindestens einem der Oxyde $ThO_2$, $Y_2O_3$, $La_2O_3$, einem Oxyd der seltenen Erden, CaO, MgO, $Al_2O_3$, $ZrO_2$, BaO, $SiO_2$, $Li_2O$, $TiO_2$, $Cr_2O_3$, $V_2O_5$, $Sc_2O_3$, $Nb_2O_5$, $Ta_2O_5$, $UO_2$ oder $HfO_2$.

In einer anderen weiteren Ausführungsform besteht der Werkstoff des Kerns 1 aus einer Chromlegierung mit 60 Gew.-% Cr, 15 - 25 Gew.-% Fe und 15 - 25 Gew.-% Mo.

In einer speziellen Ausführungsform besteht der Werkstoff des Kerns 1 aus mit 0,5 Gew.-% Bor dotiertem, oxyddispersionsgehärtetem $Ni_3Si$ mit 2 Gew.-% $ThO_2$ oder $Y_2O_3$ oder $La_2O_3$. Vorzugsweise ist der Werkstoff des Kerns 1 aus zwei Zonen aufgebaut, wobei die im Innern liegende Kernzone aus mit 2 Gew.-% $ThO_2$ oder $Y_2O_3$ oxyddispersionsgehärtetem $Ni_3Si$ und die aussenliegende Randzone aus nicht-oxyddispersionsgehärtetem, mit 0,5 Gew.-% Bor dotiertem $Ni_3Si$ besteht.

## Ansprüche

1. Bauteil zur Stromführung zwischen benachbarten flachen, ebenen, stapelförmig angeordneten Hochtemperatur-Brennstoffzellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch verbunden und der zwischen den Elektroden liegende Zwischenraum durch eine gasdichte, elektrisch leitende Trennplatte (9) in zwei, die unterschiedlichen gasförmigen Medien Brennstoff und Sauerstoffträger führenden Räume unterteilt ist, dadurch gekennzeichnet, dass es aus einem die geometrische Form bestimmenden Kern (1) aus einem warmfesten Werkstoff ausgewählt aus einer Eisenbasis- oder Nickelbasislegierung, oder Fe, Cr, Mo, W oder einer Legierung dieser Elemente, die höchstens 0,2 Gew.-% Al, Ti, Nb, Co und höchstens 0,5 Gew.-% Si enthält, oder der intermetallischen Verbindung Nickelsilizid $Ni_3Si$ und einer in Sauerstoffatmosphäre bei Betriebstemperatur nicht oxidierenden metallischen Hülle (3) als Schutzschicht ausgewählt aus den Elementen Au, Pd, Pt oder einer beliebigen Legierung mindestens zweier dieser Elemente und einer als Diffusionssperre dienenden Zwischenschicht (2) aus $Ni_3Si$ zwischen Kern (1) und Hülle (3) besteht.

2. Bauteil nach Anspruch 1, dadurch gekennzeichnet, dass es als Stromkollektor in Form eines Kontaktfingers (6) oder Kammes oder Drahtes (8) oder Bandes (12) oder Geflechtes ausgebildet ist.

3. Bauteil nach Anspruch 1, dadurch gekennzeichnet, dass es als Trennplatte (9) oder als Bipolarplatte (10) ausgebildet ist.

4. Bauteil nach Anspruch 1, dadurch gekennzeichnet, dass der Werkstoff des Kerns (1) aus mit weiteren, zum Teil das Si substituierenden Elementen dotiertem, bei Betriebstemperaturen bis 1000 °C eine hohe Kriechfestigkeit und federnde Eigenschaften aufweisenden $Ni_3Si$ besteht, welches allein direkt zur Aufnahme der mechanischen Belastung im Betrieb herangezogen wird.

5. Bauteil nach Anspruch 1, dadurch gekennzeichnet, dass der Werkstoff des Kerns (1) aus einer Nickelbasislegierung mit höchstens 78 Gew.-% Nickel besteht und dass eine mechanisch nicht belastete Zwischenschicht (2) von höchstens 100 μm Dicke zwischen Kern und Hülle vorgesehen ist.

6. Bauteil nach Anspruch 5, dadurch gekennzeichnet, dass der Werkstoff des Kerns (1) aus einer oxyddispersionsgehärteten Ni/Cr-Legierung mit höchstens 78 Gew.-% Ni und mindestens 20 Gew.-% Cr mit höchstens total 2 Gew.-% von Dispersoiden ausgewählt aus mindestens einem der Oxyde $ThO_2$, $Y_2O_3$ oder $La_2O_3$ besteht.

7. Bauteil nach Anspruch 1, dadurch gekennzeichnet, dass der Werkstoff des Kerns (1) aus einer oxyddispersionsgehärteten W- oder Mo- oder W/Mo-Legierung mit höchstens total 5 Gew.-% an Dispersoiden ausgewählt aus mindestens einem der Oxyde $ThO_2$, $Y_2O_3$, $La_2O_3$, einem Oxyd der seltenen Erden, CaO, MgO, $Al_2O_3$, $ZrO_2$, BaO, $SiO_2$, $Li_2O$, $TiO_2$, $Cr_2O_3$, $V_2O_5$, $Sc_2O_3$, $Nb_2O_5$, $Ta_2O_5$, $UO_2$ oder $HfO_2$ besteht.

8. Bauteil nach Anspruch 1, dadurch gekennzeichnet, dass der Werkstoff des Kerns (1) aus einer Chromlegierung mit 60 Gew.-% Cr, 15 - 25 Gew.-% Fe und 15 - 25 Gew.-% Mo besteht.

9. Bauteil nach Anspruch 1, dadurch gekennzeichnet, dass der Werkstoff des Kerns (1) aus mit 0,5 Gew.-% Bor dotiertem, oxyddispersionsgehärtetem $Ni_3Si$ mit bis 2 Gew.-% $ThO_2$, $Y_2O_3$ oder $La_2O_3$ besteht.

10. Bauteil nach Anspruch 1, dadurch gekennzeichnet, dass der Werkstoff des Kerns (1) aus zwei Zonen aufgebaut ist, wobei die im Innern liegende Kernzone aus mit 2 Gew.-% $ThO_2$ oder $Y_2O_3$ oxyddispersionsgehärtetem $Ni_3Si$ und die aussenliegende Randzone aus nicht-oxyddispersiongehärtetem, mit 0,5 Gew.-% Bor dotiertem $Ni_3Si$ besteht.

FIG.1

FIG.2

FIG.3

## FIG.4

## FIG.5

## FIG.6

## FIG.7

# FIG. 8

# FIG.9

# FIG.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 606 762 (M. HSU) --- | | H 01 M 8/02 |
| A | US-A-3 516 865 (C.S. TEDMON) --- | | |
| A | PATENT ABSTRACTS OF JAPAN, Band 13, Nr. 343 (E-796)[3691], 2. August 1989; & JP-A-1 100 866 (TOA NENRYO KOGYO K.K.) 19-04-1989 ----- | | |
| | | | **RECHERCHIERTE SACHGEBIETE (Int. Cl.5)** |
| | | | H 01 M |
| | Der vorliegende Recherchenbericht wurde für alle Patentansprüche erstellt | | |

| Recherchenort | Abschlußdatum der Recherche | Prüfer |
|---|---|---|
| DEN HAAG | 10-10-1990 | D'HONDT J.W. |

EPO FORM 1503 03.82 (P0403)